# EUROPEAN PATENT APPLICATION

(11) **EP 2 840 796 A1**
(43) Date of publication of application: **25.02.2015**
(21) Application number: 13181381.8
(22) Date of filing: 22.08.2013
(51) Int. Cl.: H04N 21/4223, H04N 21/4415, H04N 21/45, H04N 21/482

(54) **Datum displaying method applied to smart television**

(71) Applicant: Top Victory Investments Ltd., Kowloon, Hong Kong (CN)
(72) Inventor: Hsu, Hung-Wang, New Taipei City 23553 (TW); Hsiao, Shih-Chieh, New Taipei City 23553 (TW)
(74) Representative: Chaillot, Geneviève

(57) **Abstract**

A datum displaying method applied to a smart television can utilize a camera and a microphone of the smart television to capture image and acoustic features for identification and comparison, or utilize an NFC module of the smart television to directly acquire identification information of the user, so as to determine whether the user passes the identification. If yes, the user can log in the smart television, and therefore, the smart television provide a convenient identification function. Furthermore, after the identification information of the login user is confirmed, the smart television can automatically display a corresponding personal user interface and then unlock the program with classified constraint according to authorization information of the login user, and therefore, the smart television provide a function of smoothly watching the program with the classified constraint.

## Description

### BACKGROUND OF THE INVENTION

### 1. Field of the Invention

The present invention relates to a datum displaying method, and more particularly, to a datum displaying method applied to a smart television.

### 2. Description of the Prior Art

A conventional smart television can be a television set or a set-top box product that includes an operating system, the user can install and remove many kinds of application programs according to actual demand or connect to Internet via wire/wireless connection. The smart television usually provides a personal user interface, and the user can set and display different parameters, such as brightness, contrast, sound volume, favorite channel, icon selection and so on, according to personal demand. The user further can display icon of APK stores, such as Youtube, Facebook, Twitter, etc, on the main frame for personal convenient. Therefore, an identification of the users is necessary to help the smart television to provide the personal user interfaces for different users.

However, the conventional identification of the conventional smart television utilizes the remote controller or voice recognition to input identification information (the account and the password). The identification information is easy to be misappropriated as the password is simple, and the complicated password may result difficult input and easy loss. Besides, the conventional smart television requests the user to input the account and the password again when the channel is switched to display a program with classified constraint, even though the correct account and password have been input. Operation of the conventional smart television is inconvenient.

### SUMMARY OF THE INVENTION

The present invention provides a datum displaying method applied to a smart television, to provide a convenient identification function and a function of smoothly watching the program with the classified constraint.

According to an aspect of the invention, there is provided a datum displaying method applied to a smart television. The datum displaying method includes following steps: (A) setting identification information and authorization information of a user in the smart television; (B) logging in the smart television by the set identification information; and, (C) after the identification information of the login user is confirmed, automatically displaying a corresponding personal user interface and automatically unlocking an allowable program with classified constraint according to the authorization information of the login user by the smart television.

In an embodiment of the invention, step (A) includes following steps: (At) after initialization of the smart television, automatically setting a super user with the highest authorization; (A2) establishing the identification information and the authorization information of the other user by the super user; and, (A3) after a plurality of users exist, establishing or amending the identification information and the authorization information of the user with lower authorization by the user with higher authorization.

In an embodiment of the invention, step (C) includes following steps: (C1) after the identification information of the login user is confirmed, actuating a camera of the smart television to automatically capture an image; (C2) determining whether the other user exists according to the captured image; (C3) when the other user exists, determining the identification information and the authorization information of the other user according to the captured image; (C4) determining whether a user without the identification information exists; (C5) when the user without the identification information does not exist, determining whether authorization of the login user is higher than that of the other user; (C6) when the authorization of the login user is higher than that of the other user, selecting the program by the login user; (C7) determining whether the other user is allowed to watch the selected program according to the classified constraint of the selected program; (C8) when the selected program is not allowed to be watched by the other user, prompting a message saying that the selected program is not allowed to be watched by the other user; (C9) determining whether the login user makes the authorization open to public for the other user; and, (C10) when the login user makes the authorization open to public for the other user, displaying the selected program.

In an embodiment of the invention, step (C) further includes following step: (C11) when step (C2) determines that the other user does not exist, automatically displaying the personal user interface corresponding to the login user and automatically unlocking the allowable program with the classified constraint according to the authorization information of the login user.

In an embodiment of the invention, step (C) further includes following step: when step (C5) determines that the authorization of the login user is lower than that of the other user, step (C11) is executed.

In an embodiment of the invention, step (C) further includes following steps: (C12) when step (C4) determines that the user without the identification information exists, prompting a message asking for establishing the identification information and the authorization information of the user without the identification information; (C13) determining whether the identification information and the authorization information of the user without the identification information are established by the login user; and, when step (C13) determines that the identification information and the authorization information of the user without the identification information are established by the login user, executing step (C5).

In an embodiment of the invention, step (C) further includes following step: (C14) when step (C13) determines that the identification information and the authorization information of the user without the identification information are not established by the login user, automatically establishing an unregistered user with the lowest authorization for the user without the identification information and then returning to step (C6).

In an embodiment of the invention, step (C) further includes following step: (C15) when step (C9) determines that the login user does not make the authorization open to public for the other user, returning to a program selecting interface or the former program.

The smart television of the present invention can utilize a camera and a microphone of the smart television to capture image and acoustic features for identification and comparison, or utilize an NFC module of the smart television to directly acquire identification information of the user, so as to determine whether the user passes the identification. If yes, the user can log in the smart television, and therefore, the smart television provide a convenient identification function. Unlike the conventional smart television which utilizes the remote controller or voice recognition to input identification information (the account and the password). The identification information is easy to be misappropriated as the password is simple, and the complicated password may result difficult input and easy loss. In addition, after the identification information of the login user is confirmed, the smart television of the present invention can automatically display a corresponding personal user interface, and then unlock the program with classified constraint according to authorization information of the login user, and therefore, the smart television provide a function of smoothly watching the program with the classified constraint. Unlike the conventional smart television which requests the user to input the account and the password again when the channel is switched to display a program with classified constraint, even though the correct account and password have been input.

These and other objectives of the present invention will no doubt become obvious to those of ordinary skill in the art after reading the following detailed description of the preferred embodiment that is illustrated in the various figures and drawings.

### BRIEF DESCRIPTION OF THE DRAWINGS

FIG. 1 is a functional block diagram of a smart television according to an embodiment of the present invention.
FIG. 2 is a flow chart of a datum displaying method applied to a smart television according to an embodiment of the present invention.
FIG. 3 is a flow chart of step A of the datum displaying method according to an embodiment of the present invention.
FIGs. 4A and 4B illustrate a flow chart of step C of the datum displaying method according to an embodiment of the present invention.

### DETAILED DESCRIPTION

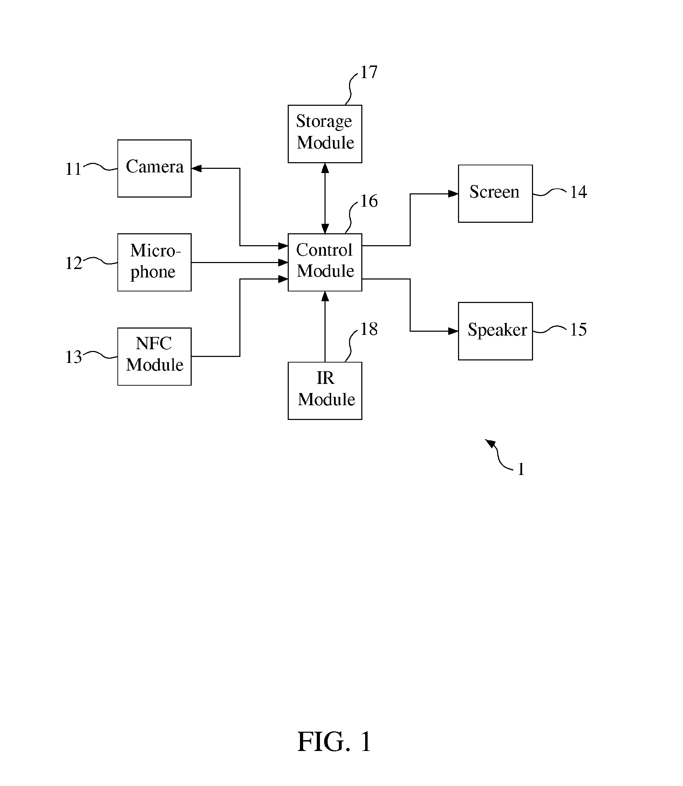

Please refer to FIG. 1. FIG. 1 is a functional block diagram of a smart television according to an embodiment of the present invention. The smart television 1 of the present invention includes a camera 11, a microphone 12, a near field communication (NFC) module 13 or the other datum acquiring components, a screen 14 and a speaker 15 or the other datum outputting components, a control module 16, a storage module 17, and an infrared (IR) module 18. The camera 11 and the microphone 12 are respectively utilized to capture an image and acoustic information within a range of the smart television 1. Identification information with the image and the acoustic features can be set inside the smart television 1 via the camera 11 and the microphone 12. The smart television 1 can identify the image and the acoustic information of the user by the camera 11 and the microphone 12, and compare an identification result with the identification information with the image and the acoustic features stored inside the smart television 1, so as to determine whether the user can pass identification to log in and use the smart television 1.

The NFC module 13 is utilized to capture a NFC signal outputted by the other electronic device (such as the mobile phone) which can output the NFC signal and is located within the range of the smart television 1. The user can set the identification information into the smart television 1 by moving the electronic device, which has the built-in identification information and is able to output the NFC signal, close to the NFC module 13. The smart television 1 can utilize the NFC module 13 to acquire the identification information built-in the electronic device via the NFC module 13 for a comparison with the identification information stored inside the smart television 1, so as to determine whether the user passes the identification for allowance of the smart television 1. However, feature identification of the present invention is not limited to the above-mentioned embodiments. For example, the smart television 1 can be used to acquire the fingerprint, the retina and so on. The smart television 1 can execute the identification of the fingerprint, the retina and so on, to compare the identification result with the identification stored inside the smart television 1, so as to determine whether the user passes the identification for the allowance of the smart television 1.

The screen 14 and the speaker 15 are utilized to display the image and acoustic signal to perform information to the user, such as providing the television program or movies, providing an internet interface, providing a setting interface to guide the user for setting the identification information and the authorization information, and so on. The control module 16 controls application of the components disposed inside the smart television 1. The storage module 17 can store the identification information and the authorization information of the user, and an operating system and related application programs executed by the control module 16. The IR module 18 is utilized to receive an external command outputted from the IR remote controller, such as the external command of switching the television programs by pressing a button disposed on the IR remote controller. The control module 16 can switch the television programs according to the external command received by the IR module 18. Further, the user can press the button of the IR remote controller to generate characters (such as the external command) on the setting interface, and the control module 16 can execute the corresponding application, such as inputting a name of the user, according to the external command received by the IR module 18. Application of the present invention is not limited to the above-mentioned embodiments. For example, the smart television 1 can further include a radio frequency (RF) module, such as Bluetooth, to receive the external command outputted by the RF remote controller, or utilize the NFC module 13 to receive the external command outputted by the NFC remote controller.

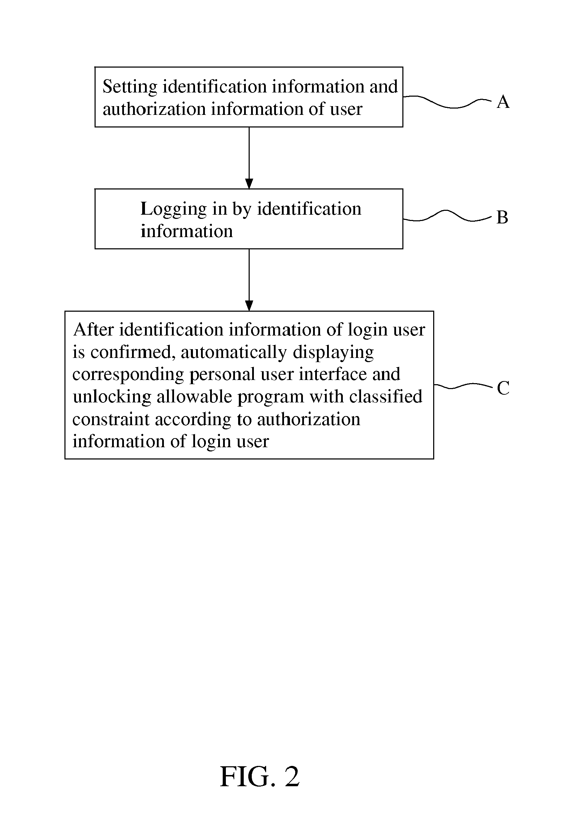

Please refer to FIG. 2. FIG. 2 is a flow chart of a datum displaying method applied to a smart television according to an embodiment of the present invention. Method illustrated in FIG. 2 is suitable for the smart television 1 shown in FIG. 1. First, in step A, the user can set the identification information with the image and the acoustic features into the smart television 1 by the camera 11 and the microphone 12 via the setting interface. The user further can move the electronic device, which has the built-in identification information and is able to output the NFC signal, close to the NFC module 13 to set the identification information into the smart television 1. The user further can press the button disposed on the IR remote controller to input the information such as the name of the user and to set the authorization information into the smart television 1. The authorization information includes allowance that what classified program is allowed to be watched, what period is allowed to watch the program, how long of the program can be watched, and so on.

In step B, the user can utilize the setting identification information to log in the smart television 1. In the meantime, the smart television 1 can identify the image and acoustic information via the camera 11 and the microphone 12, compare the identification result with the identification information stored inside the smart television 1, so as to determine whether the user passes the identification to log in the smart television 1. Further, the user can move the electronic device, which has the built-in identification information and is able to output the NFC signal, close to the NFC module 13, so that the smart television 1 can acquire the identification information built in the electronic device via the NFC module 13, to directly compare the acquired identification information with the identification information stored inside the smart television 1, and to determine whether the user passé the identification to log in the smart television 1.

Final, in step C, when the identification information of the login user is confirmed, the smart television 1 can automatically display the corresponding personal user interface and then automatically unlock an allowable program with classified constraint according to the authorization information of the login user. The smart television 1 of the present invention utilizes the camera 11 and the microphone 12 to capture the image and the acoustic features for identification and comparison, or utilizes the NFC module 13 to directly acquire the identification information for determining whether the user has the identification information. The user with the identification information can log in the smart television 1. The present invention provides the convenient identification function. A conventional identification of the conventional smart television needs the remote controller to input the account and the password, which has drawbacks of misappropriation, difficult input and easy loss. Besides, the smart television 1 of the present invention can automatically display the corresponding personal user interface after the identification information of the login user is confirmed, and automatically unlock the allowable program with the classified constraint according to the authorization information of the login user, so that the smart television 1 can provide smooth operation for watching the program with the classified constraint. The inconveniently conventional smart television requests to input the account and the password when the channel is switched to the program with the classified constraint, even though the correct account and the correct password have been input.

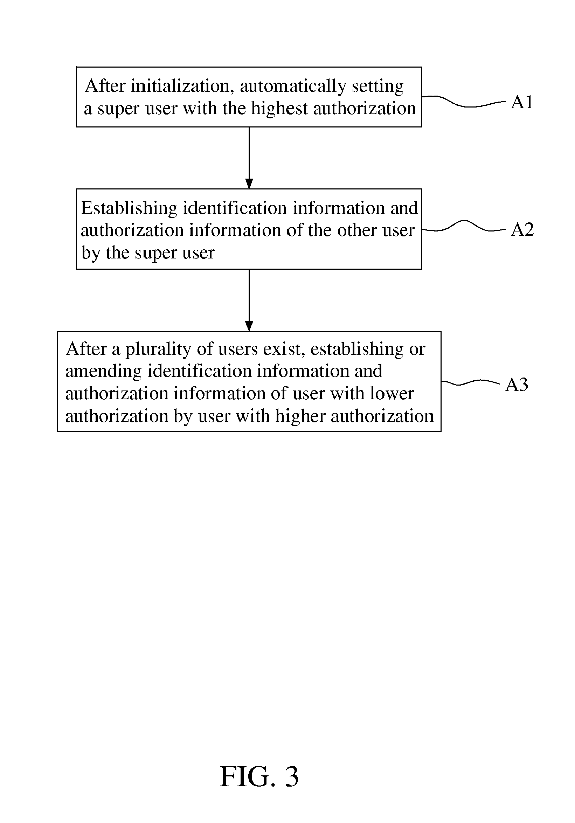

Please refer to FIG. 3. FIG. 3 is a flow chart of step A of the datum displaying method according to an embodiment of the present invention. The method illustrated in FIG. 3 is suitable for the smart television 1 shown in FIG. 1. First, in step A1, after initialization of the smart television 1, the smart television 1 automatically sets a super user with the highest authorization, and demands that the user can set the identification information with the image and the acoustic features by the camera 11 and the microphone 12 of the smart television 1 via the setting interface. The user further can set the identification information into the smart television 1 by moving the electronic device, which has the built-in identification information and is able to output the NFC signal, close to the NFC module 13, and then input information (such as the name of the user) by pressing the button disposed on the IR remote controller. The super user has the highest authorization, and the super user can watch the whole programs with the classified constraint, can watch the programs at any period, and can watch the programs without time limitation. Then, in step A2, the super user establishes the identification information and the authorization information of the other users into the smart television 1. Final, in step A3, after a plurality of users exist, the user with higher authorization can establish or amend the identification information and the authorization information of the user with lower authorization in the smart television 1.

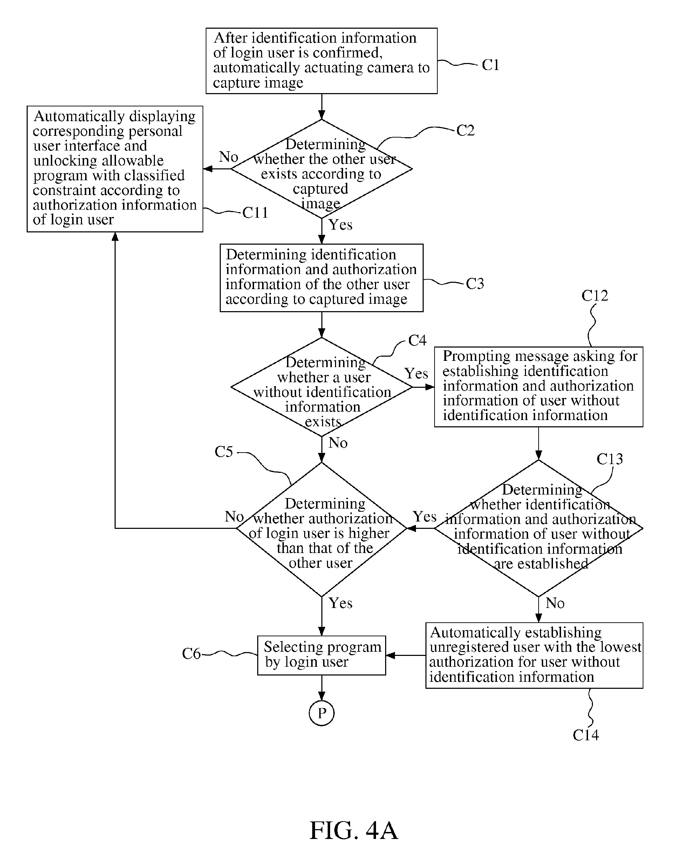

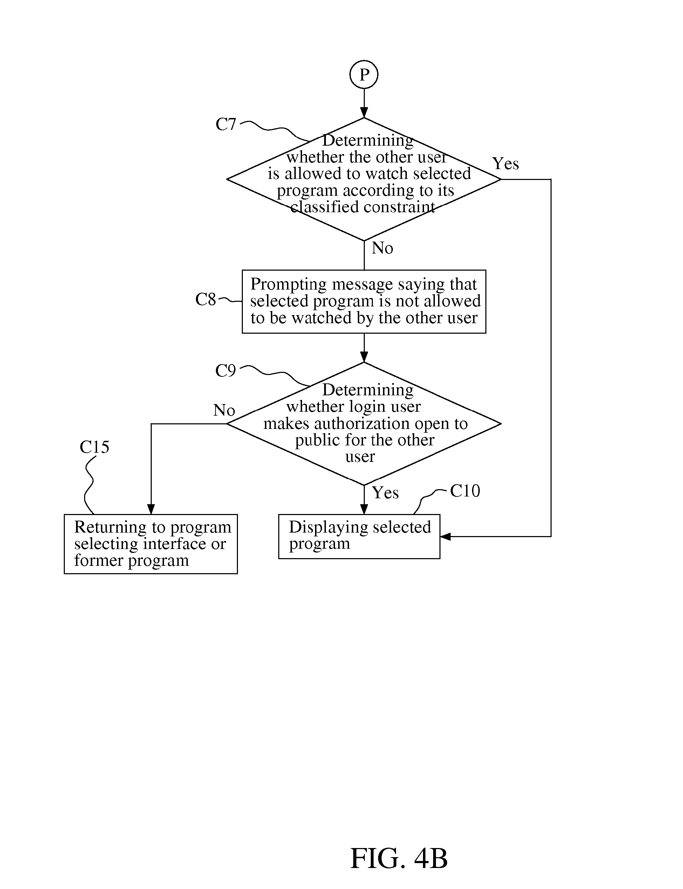

Please refer to FIGs. 4A and 4B. FIGs. 4A and 4B illustrate a flow chart of step C of the datum displaying method according to an embodiment of the present invention. The method illustrated in FIGs. 4A and 4B is suitable for the smart television 1 shown in FIG. 1. First, in step C1, when the smart television 1 confirms the identification information of the login user, the smart television 1 automatically actuates the camera 11 to capture the image no matter whether the camera 11 is actuated or not (for example, the camera 11 is not actuated when the microphone 12 is utilized for the identification). Then, in step C2, the smart television 1 determines whether the other user exists according to the image captured by the camera 11. When step C2 determines that the other user does not exist, there is single one user who passes the identification in front of the smart television 1. Then, step C11 is executed, and the smart television 1 automatically displays the corresponding personal user interface, and unlocks the allowable program with the classified constraint according to the authorization information of the login user.

When step C2 determines that the other user exists, there are the login user, who has the identification information so as to pass the identification, and the other user without the identification information in front of the smart television 1. Then, in step C3, the smart television 1 identifies the other user according to the image captured by the camera 11, and compares the identification result with the identification information stored inside the smart television 1, so as to determine the identification information and the authorization information of the other user. In step C4, the smart television 1 determines whether a user without the identification information exists. When step C4 determines that the user without the identification information does not exists, which means the other user has the identification information, step C5 is executed to determine whether the authorization of the login user is higher than that of the other user. When step C5 determines that the authorization of the login user is lower than that of the other user, the authorization of the login user, such as the allowable program with the classified constraint, the period capable of watching the program, and the time limitation capable of watching the program, is lower than that of the other user, and the authorization of the other user is unnecessary to be reduced. Then, in step 11, the smart television 1 automatically displays the personal user interface that corresponds to the login user, and automatically unlocks the program with the classified constraint according to the authorization information of the login user.

When step C4 determines that the user without the identification information exists, there is the user without the identification information in front of the smart television 1. Then, step C12 is executed, and the smart television 1 utilizes the screen 14 and the speaker 15 to prompt a message saying that the login user can establish the identification information and the authorization information of the user without the identification information via the setting interface. In step C13, the smart television 1 determines whether the identification information and the authorization information of the user without the identification information are established by the login user. When step C13 determines that the login user establishes the identification information and the authorization information of the user without the identification information, step C5 is executed. When step C13 determines that the login user does not establish the identification information and the authorization information of the user without the identification information, step C14 is executed that the smart television 1 automatically sets the user without the identification information as the user having the lowest authorization.

When step C5 determines that the authorization of the login user is higher than that of the other user, which means the authorization of the login user, such as the allowable program with the classified constraint, the period capable of watching the program, and the time limitation capable of watching the program, is higher than the authorization of the other user. Then, in step C6, step C7 is executed no matter what program the user selects, and the smart television 1 determines whether the other user can watch the program according to the classified constraint of the selected program. Similarly, after step c14, the authorization of the login user is higher than that of the guest user with the lowest authorization. Then, in step 6, step C7 is executed no matter what program the user selects, and the smart television 1 determines whether the other user can watch the program according to the classified constraint of the selected program.

When step C7 determines that the other user can watch the program according to the classified constraint of the selected program, step C10 is executed that the smart television 1 directly displays the selected program. When step C7 determines that some of the other user can not watch the program according to the classified constraint of the selected program, step C8 is executed and the smart television 1 utilizes the screen 14 and the speaker 15 to prompt the message saying that the user is unallowable to watch the selected program, and further to prompt whether the login user makes the authorization open to public for the other user. Then, in step C9, the smart television 1 determines whether the login user makes the authorization open to public for the other user. When step C9 determines that login user makes the authorization open to public for the other user, step C10 is executed that the smart television 1 displays the selected program. When step C9 determines that login user does not make the authorization open to public for the other user, step C15 is executed that the smart television 1 does not display the selected program to prevent the selected program from being watched by the identified user. Thus, the smart television 1 returns to the program selecting interface or the former watched program.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A datum displaying method applied to a smart television, the datum displaying method comprising:
(A) setting identification information and authorization information of a user in the smart television;
(B) logging in the smart television by the set identification information; and
(C) after the identification information of the login user is confirmed, automatically displaying a corresponding personal user interface and automatically unlocking an allowable program with classified constraint according to the authorization information of the login user by the smart television.

2. The datum displaying method of claim 1, wherein step (A) comprises:
(A1) after initialization of the smart television, automatically setting a super user with the highest authorization;
(A2) establishing the identification information and the authorization information of the other user by the super user; and
(A3) after a plurality of users exist, establishing or amending the identification information and the authorization information of the user with lower authorization by the user with higher authorization.

3. The datum displaying method of claim 1, wherein step (C) comprises:
(C1) after the identification information of the login user is confirmed, actuating a camera of the smart television to automatically capture an image;
(C2) determining whether the other user exists according to the captured image;
(C3) when the other user exists, determining the identification information and the authorization information of the other user according to the captured image;
(C4) determining whether a user without the identification information exists;
(C5) when the user without the identification information does not exist, determining whether authorization of the login user is higher than that of the other user;
(C6) when the authorization of the login user is higher than that of the other user, selecting the program by the login user;
(C7) determining whether the other user is allowed to watch the selected program according to the classified constraint of the selected program;
(C8) when the selected program is not allowed to be watched by the other user, prompting a message saying that the selected program is not allowed to be watched by the other user;
(C9) determining whether the login user makes the authorization open to public for the other user; and
(C10) when the login user makes the authorization open to public for the other user, displaying the selected program.

4. The datum displaying method of claim 3, wherein step (C) further comprises:
(C11) when step (C2) determines that the other user does not exist, automatically displaying the personal user interface corresponding to the login user and automatically unlocking the allowable program with the classified constraint according to the authorization information of the login user.

5. The datum displaying method of claim 4, wherein when step (C5) determines that the authorization of the login user is lower than that of the other user, step (C11) is executed.

6. The datum displaying method of claim 3, wherein step (C) further comprises:
(C12) when step (C4) determines that the user without the identification information exists, prompting a message asking for establishing the identification information and the authorization information of the user without the identification information;
(C13) determining whether the identification information and the authorization information of the user without the identification information are established by the login user; and
when step (C13) determines that the identification information and the authorization information of the user without the identification information are established by the login user, executing step (C5).

7. The datum displaying method of claim 6, wherein step (C) further comprises:
(C14) when step (C13) determines that the identification information and the authorization information of the user without the identification information are not established by the login user, automatically establishing an unregistered user with the lowest authorization for the user without the identification information and then returning to step (C6).

8. The datum displaying method of claim 3, wherein step (C) further comprises:
(C15) when step (C9) determines that the login user does not make the authorization open to public for the other user, returning to a program selecting interface or the former program.
